# EUROPEAN PATENT APPLICATION

(11) **EP 3 789 847 A1**
(43) Date of publication of application: **10.03.2021**
(21) Application number: 19195273.8
(22) Date of filing: 04.09.2019
(51) Int. Cl.: G06F 3/01

(54) **FORCE COMPENSATION METHOD AND DEVICE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method to obtain total compensation force information of a user input device is disclosed. The method comprising obtaining velocity information of a portion of the user input device. Obtaining acceleration information of the portion of the user input device. Obtaining damping force information force based on the velocity information. Obtaining inertial compensation force information based on the acceleration information. Combining the damping compensation force and inertial compensation force to provide the compensation force information of the user input device.

## Description

### BACKGROUND

Active inceptors provide force feedback to an operator of a user input device through internally simulating a feel model, one example being a mass-spring-damper (MSD) system, and driving an actuated mechanism to mimic the dynamic performance of the feel model.

### BRIEF DESCRIPTION OF DRAWINGS

Figure 1a illustrates an active input device according to some examples.
Figure 1b illustrates an active input device when the device is moved by a mechanical means.
Figure 1c illustrates an active input device when the device is moved by a user input force.
Figure 2 illustrates sensed force as a magnitude of user input device positon, showing the magnitude of unwanted forces.
Figure 3 illustrates a method to determine a compensation force according to some examples.
Figure 4 illustrates a noise cancelling method to determine a compensation force according to some examples.
Figure 5 illustrates a method to determine a compensated sensed force according to some examples.
Figure 6 illustrates a computer readable medium in accordance with some examples.

### DETAILED DESCRIPTION

Active inceptor systems may be used to provide force feedback to a user input device. An active inceptor system may be used in control of flight surfaces of aircraft, such as helicopters or aeroplanes. However, they may also have applications in other vehicles or any other application where force feedback is useful.

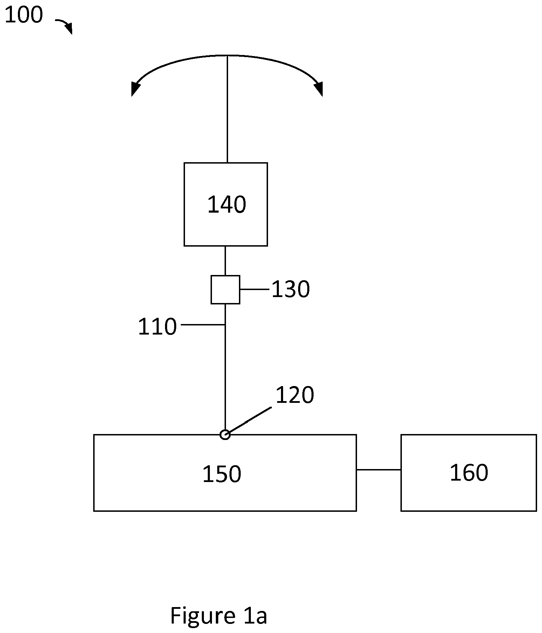

An active inceptor system 100 is illustrated in Figure 1a. Active inceptor system 100 comprises a user input device 110, a pivot 120, a force sensor 130, and a grip portion 140. The active input device also comprises mechanism 150 and force feedback circuitry 160. The active inceptor system 100 may also comprise other sensors, not indicated in Figure 1a, for example position, velocity and/or acceleration sensors. The active inceptor system 100 may also comprise more than one force sensor and/or other type of sensor.

The user input device 110 may move about the pivot 120 in at least one axis. The user may grip the user input device 110 using grip portion 140, although they are not limited to gripping the user input device 110 at grip portion 140.

The user input device 110 may be a stick, an inceptor, or throttle. The user input device 110 may have any shape. The grip portion 140 may be the part of the user input device 110 that is designed for the user to hold. Grip portion 140 may also be merely a portion of user input device 110 that has a different mass or profile than the rest of the user input device 110.

Force sensor 130 is illustrated as being coupled to the user input device 110, however it may be positioned in any location that still enables the user input force to be determined. For example, it may be located on the grip portion 140, the user input device 110, pivot 120 or mechanism 150.

Force feedback may be provided to the user input device 110 with a force feedback control loop using force feedback circuitry 160. Force feedback system 160 may internally simulate a feel model, such as a second order mass-spring-damper (MSD) model, although other models may be used. The force feedback circuitry 160 may cause mechanism 150 to apply a force to the user input device 110, the force dependent upon predetermined settings and chosen feel model.

A user may also input an operator force on the user input device 110 to move the user input device 110. The user may feel a feedback force from mechanism 150 dependent upon the predetermined settings and chosen feel model.

Due in part to the inertia of the mass of the grip portion 140, when movement of the user input device 110 is initiated, either by user input force or the mechanism 150, a force is felt on the force sensor 130. The magnitude and direction of the force is dependent upon at least the location of the force sensor 130, the direction of the applied force, and whether the movement is initiated by the mechanism 150 or by the user (i.e. the relationship between the location of the force sensor 130 and the position of the user or mechanism applied force).

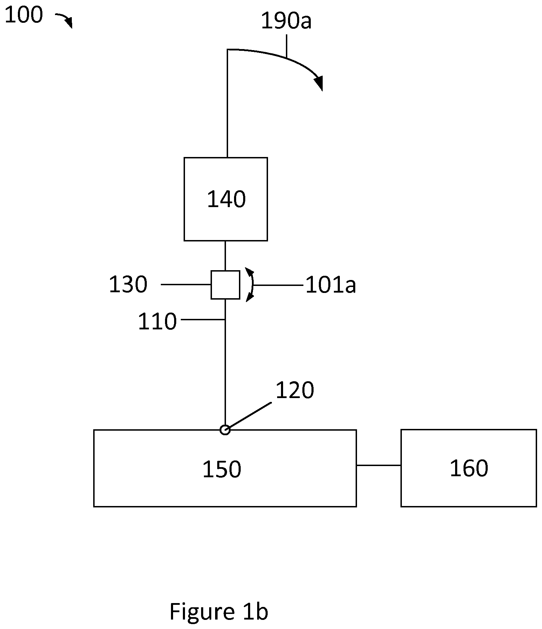

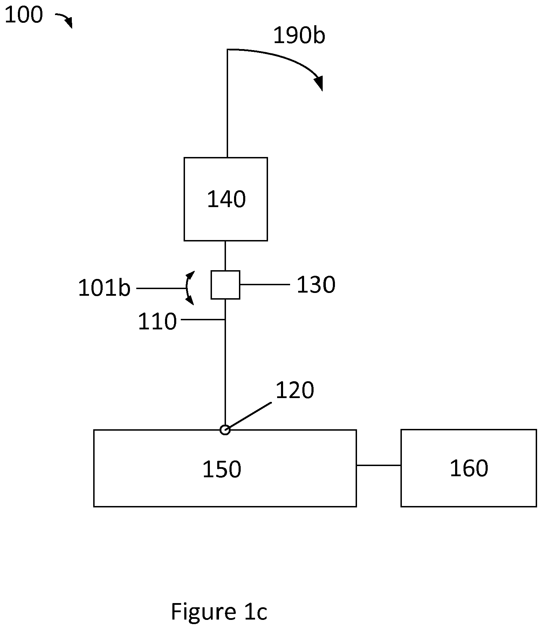

Two examples of the force felt on the force sensor 130 are illustrated in Figures 1b and 1c.

In Figure 1b, the movement is initiated by the mechanism 150, moving the user input device 110 in direction 190a about the pivot 120. Inertial effects, since the grip portion 140 has a mass that resists movement, cause a tension force 101a to be felt on the right hand side of force sensor 130. Similarly the inertial effects would cause a compression on the other side of the force sensor 130.

In Figure 1c the movement is initiated by a user applying a force causing the user input device 110 to move in the direction 190b about the pivot 120. The force may be applied at the grip portion 140 (i.e. above the force sensor). The force applied by the user, may be felt as a tension 101b on the left hand side of the force sensor 130. Similarly the inertial effects would cause a compression on the other side of the force sensor 130.

The force induced due to the inertial effects is a physical property of the active inceptor system 100. However to improve the system bandwidth the forces induced due to the inertial effects should be mitigated. If the inertial forces are not mitigated, then they may limit the maximum bandwidth of the active input device system 100, deteriorating the tactile feel of the active input device, in some examples making it feel sluggish. This in turn may limit performance of the user and/or vehicle the active inceptor system 100 controls.

The user input device 110 may comprise a stick or an inceptor, or any other appropriate input device. The active inceptor system 100 may be used to control the flight surfaces of an aircraft. The active inceptor system 100 may be used to control vehicles, such as trains. The active inceptor system 100 may also be used for other applications, and is not limited to being applied to vehicles.

The force sensor 130 may comprise a strain gauge, such as a wheatstone bridge type arrangement, although it is not limited to this type of sensor.

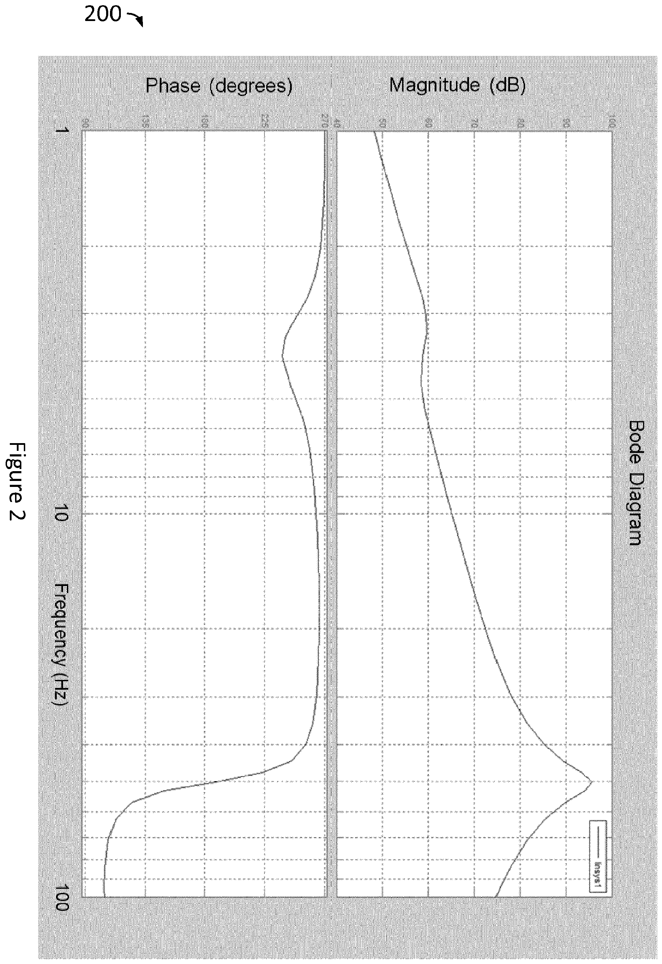

Figure 2 is an exemplary Bode plot of sensed force plotted against inceptor position. The response is very similar to an inverted 2nd order mass-spring-damper model, and the reason this looks so similar is because that is substantially what is happening within the active inceptor system 100. To counteract the reduction in bandwidth due to the inertial forces, an estimate of the transfer function illustrated in Figure 2 may be determined.

The transfer function may be estimated by determining a total compensation force, which may be removed from the sensed force sensed by force sensor 130. The total compensation force is determined by determining a damping force and an inertial force. The damping force is dependent upon the velocity of the grip portion 140, and the inertial force is dependent upon the acceleration of the grip portion 140.

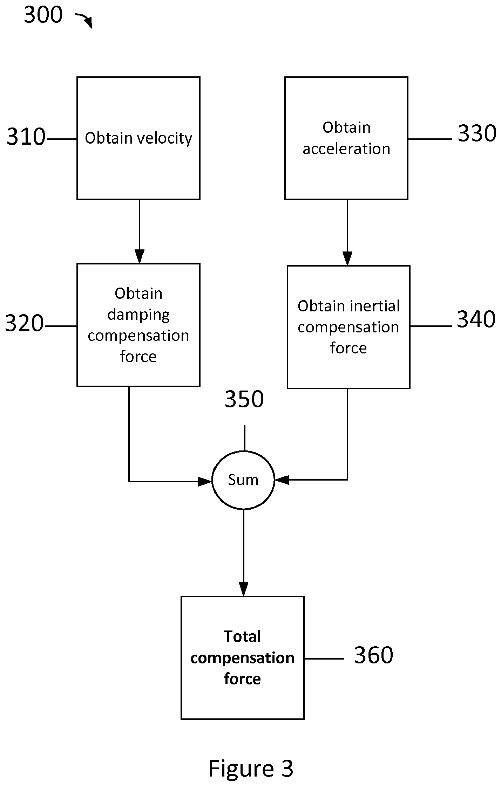

A method, 300, to determine the total compensation force information is illustrated in Figure 3. The method comprises obtaining, 310, velocity information of the user input device and/or grip portion. The damping force information is obtained, 320, based on the velocity information.

At substantially the same time as the velocity information is obtained the acceleration information is obtained 330. The inertial force information may be obtained, 340, based on the acceleration information.

The damping force information and inertial force information are combined 350 by summing to produce total compensation force information 360. The total compensation force information may then be provided to the force feedback circuitry 160 which may use it to update the sensed force supplied to the model to provide compensated force information.

The velocity information may be obtained without using a velocity sensor, or may be obtained using a velocity sensor close to or on the grip portion 140.

In some examples obtaining, 310, velocity information of the user input device and/or grip portion may comprise obtaining position information of the user input device 110 from a position sensor located close or on the grip portion 140 and differentiating the position information to obtain the velocity information.

In some examples obtaining, 310, velocity information of the user input device and/or grip portion may comprise obtaining acceleration information of the user input device 110 from an acceleration sensor located close to or on the grip portion 140 and integrating the acceleration information.

In some examples the acceleration information may be obtained from an acceleration sensor close to or on the grip portion 140. In some examples, obtaining, 330, acceleration information may comprise double differentiating a sensed position of the user input device or differentiating a velocity.

In some examples obtaining, 320, the damping force information may comprise multiplying the velocity information with a damping constant. The damping constant may depend on the physical properties of the active inceptor system 100, and may be predetermined.

In some examples obtaining, 340, the inertial force information may comprise multiplying the acceleration information with an inertia constant. The inertial constant may depend on the physical properties of the active inceptor system 100, and may be predetermined.

The accuracy of the total compensation force information may be improved by locating the sensors as close as possible to the grip portion 140, or on the grip portion 140. This is because structural flexure between the actual grip position and the location of the sensor may cause inaccuracies to build up in the sensed output.

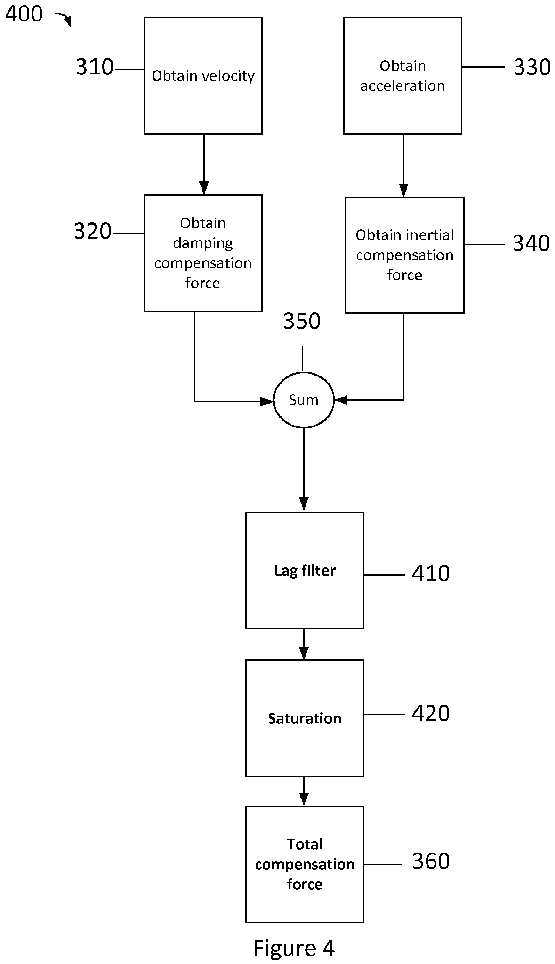

Figure 4 illustrates a method, 400, in accordance with some examples. The method 400 is substantially the same as the method described in relation to Figure 3, and any of the features described above may be applied to the method 400. The method also comprises applying, 410, a lag filter to the summed inertial compensation force information and damping compensation force information, and applying, 420, a saturation limit to the filtered total compensation force information.

A lag filter may be applied, 410, as the velocity and/or acceleration information may have high levels of noise, for example due to the use of differentiators. Using a lag filter reduces the noise of the signal. Although the lag filter is shown as occurring after the summation, is it to be understood that the lag filter could be used at any suitable positon in the method. Furthermore, other methods to reduce noise could be used instead or in addition to the application of the lag filter. There could also be more than one lag filter, for example a separate lag filters may be used at any point in the method.

Applying, 420, the saturation limit, limits the magnitude of the compensation force information to be below a predetermined value. The predetermined value may be equal to the available maximum grip force which is the maximum force a pilot is expected to apply. Limiting the compensation force information to be below a predetermined value allows for unexpectedly large forces to be identified and not summed with the sensed force. Summing an unexpectedly large force with the sensed force may reduce the performance of the active inceptor system 100. An unexpectedly large force might be result when double differentiating a position signal, which can lead to very large transient spikes in response.

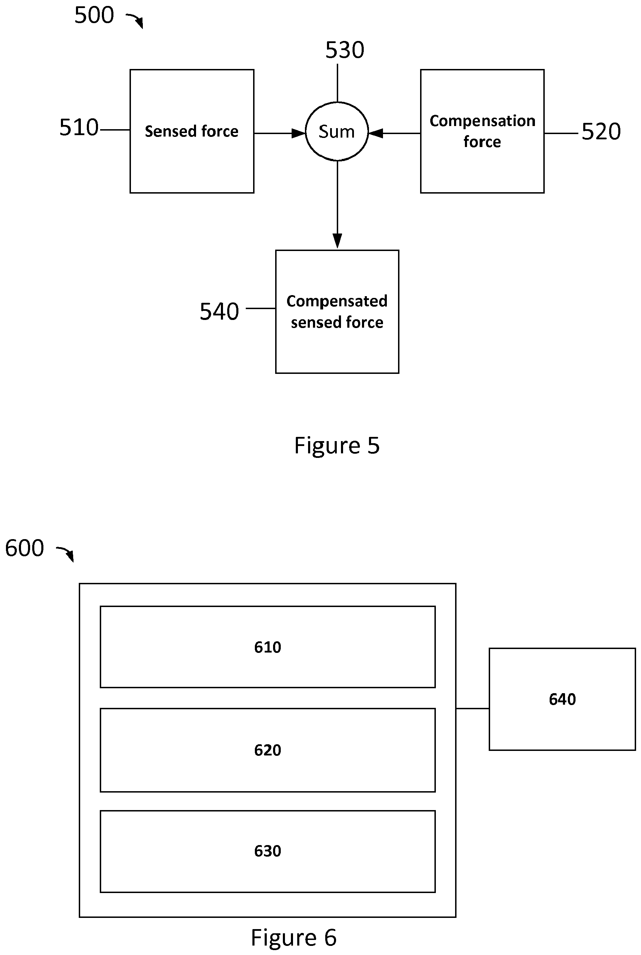

Figure 5 illustrates a method to obtain, 500, the compensated sensed force information 540. The sensed force 510 may be summed 530 with the compensation force information 520 to obtain the compensated sensed force 540. The compensated force 540 may then be provided to the force feedback circuitry 160 in order to calculate the appropriate force to apply to the user input device 110 using the mechanism 150.

Figure 6 illustrates a computer readable medium 600 in accordance with some examples. Computer readable medium 600 comprises a damping force module 610 comprising instructions, that when executed, cause a processing means 640 to obtain damping force information. Computer readable medium 600 also comprises an inertial force module 620 comprising instructions, that when executed, cause a processing means 640 to obtain inertial force information. Computer readable medium 600 comprises a total compensation force module 630 comprising instructions, that when executed, cause a processing means 640 to obtain total compensation force information.

The description refers to position information, velocity information, acceleration information, inertial force information, damping force information, and total compensation force information. This is because the method and systems may not require an absolute value of the variables to be calculated. In some examples the position information, velocity information, acceleration information, inertial force information, damping force information, and total compensation force information may comprise absolute values, in some examples they may be proportionate to the actual absolute value.

The methods described may be performed in any appropriate order and are not limited to the order as described in the description.

## Claims

1. A method to obtain total compensation force information of a user input device, the method comprising:
obtaining velocity information of a portion of the user input device;
obtaining acceleration information of the portion of the user input device;
obtaining damping force information force based on the velocity information;
obtaining inertial compensation force information based on the acceleration information; and
combining the damping compensation force and inertial compensation force to provide the compensation force information of the user input device.

2. The method according to claim 1, wherein the method further comprises compensating a sensed force acting on the user input device based on the user input compensation force information.

3. The method according to any preceding claim, wherein the magnitude of the compensation force information is limited to be below a threshold value.

4. The method according to any preceding claim, further comprising differentiating a sensed position of the user input device to obtain the velocity information.

5. The method according to any preceding claim, further comprising double differentiating a sensed position of the user input device or differentiating a velocity of the user input device to obtain the acceleration information.

6. The method according to any of claims 2 or 3, further comprising integrating acceleration information to obtain the velocity information

7. The method according to any preceding claim, further comprising applying a lag filter to the user input compensation force information prior to compensating the sensed force.

8. The method according to any preceding claim, wherein obtaining the damping compensation force information comprises multiplying the velocity information with a damping constant.

9. The method according to any preceding claim, wherein determining the inertial compensation force information comprises multiplying the acceleration information with an inertia constant.

10. The method according to any preceding claim, wherein combining the damping compensation force information and inertial compensation force comprises adding the damping compensation force information to the inertial compensation force information.

11. The method according to any of claims, 1-4, 6-10 wherein the portion comprises an acceleration sensor.

12. The method according to any preceding claim, wherein obtaining velocity information comprises obtaining velocity information in at least one axis

13. The method according to any preceding claim, wherein obtaining acceleration information comprises obtaining velocity information in at least one axis

14. An active inceptor system comprising circuitry configured to perform the method of any preceding claim.

15. A computer readable storage medium comprising instructions that when executed cause a processing means to perform the method according to any of claims 1-13.
